# EUROPÄISCHE PATENTSCHRIFT

(11) **EP 2 819 265 B1**
(45) Veröffentlichungstag und Bekanntmachung des Hinweises auf die Patenterteilung: **28.02.2018**
(21) Anmeldenummer: 14169333.3
(22) Anmeldetag: 21.05.2014
(51) Int. Cl.: H02J 7/00, B60L 11/18

(54) **Verfahren zum Betreiben einer Ladestation**
Method for operating a charging station
Procédé destiné au fonctionnement d'une station de charge

(30) Priorität: 28.06.2013 DE 102013010774
(43) Veröffentlichungstag der Anmeldung: 31.12.2014
(73) Patentinhaber: innogy SE, 45128 Essen (DE)
(72) Erfinder: Hell, Stephan, 47259 Duisburg (DE)
(74) Vertreter: Cohausz & Florack

(56) Entgegenhaltungen:
- WO-A1-2013/021550
- DE-A1-102011 008 675
- DE-A1-102011 107 900
- US-A- 5 656 916
- US-A1- 2012 326 655

## Beschreibung

Der Gegenstand betrifft ein Verfahren zum Betreiben einer Ladestation sowie eine Ladestation eingerichtet zum Durchführen eines Verfahrens zum Betreiben einer Ladestation.

Die Verbreitung von elektrischen Ladestationen und Ladepunkten für Elektrofahrzeuge ist ein ganz wesentlicher Aspekt für die Akzeptanz von Elektromobiliät. Es ist davon auszugehen, dass in naher Zukunft ein Netz an Ladestationen verfügbar gemacht werden wird, an dem Elektrofahrzeuge, sei es Elektroautos, elektrisch betriebene Nutzfahrzeuge, Elektrofahrräder, Elektroroller oder dergleichen geladen werden können. Ein weiterer Aspekt der ganz wesentlich für die Verbreitung von Elektromobilität ist, liegt in der Ladedauer, die notwendig ist, um einen Akkumulator (Akku, Batterie) des Elektrofahrzeugs aufzuladen.

Es ist bekannt, dass ein Ladezustand (State of Charge SOC) von in etwas 80 % der Gesamtkapazität eines Akkus bereits sehr gute Ergebnisse hinsichtlich der Reichweite des Fahrzeugs liefert. Somit sollte es ein vorrangiges Ziel sein, den Ladezustand der Akkus der Elektrofahrzeuge möglichst schnell auf zumindest 80 % zu bringen. Das Laden des Akkus auf Ladezustände zwischen 80 % und 100 % erfolgt ohnehin mit einer geringeren Ladeleistung, da ansonsten der Akku an Lebensdauer einbüßt. Dies liegt daran, dass ab einem Ladezustand von 80 % der Akku beim Laden überproportional stark aufheizt. Bis zu einem Ladezustand von in etwa 80 % kann jedoch mit einer sehr hohen Ladeleistung geladen werden, ohne die Lebensdauer des Akkus zu beeinträchtigen.

Somit wird regelmäßig versucht, den Ladealgorithmus so zu gestalten, dass zu Beginn des Ladens eine möglichst hohe Ladeleistung, beispielsweise 22 Kilowatt zur Verfügung steht. Diese hohe Ladeleistung führt zu einem schnellen Erreichen des gewünschten Ladezustands von in etwa 80 %. Beim Laden mit einer hohen Ladeleistung wird die Ladestation jedoch stark beansprucht. Insbesondere Leistungsbauteile innerhalb der Ladestation sind nur für bestimmte Temperaturen ausgelegt. Ein Überschreiten von maximalen Temperaturbereichen führt bei den Bauteilen zu einer schnelleren Alterung und im schlimmsten Fall zum Ausfall des Bauteils. Somit werden Ladestationen für maximale Temperaturbereiche bzw. maximale Leistungsabgaben konzipiert.

In der Realität ist jedoch ohne aktive Temperatur- oder Leistungsüberwachung des Ladevorgangs das Erreichen dieser Temperatur- bzw. Leistungsgrenzen kaum feststellbar. Auf der anderen Seite ist jedoch eine aktive Temperaturüberwachung stets mit dem Einbau eines Temperatursensors verbunden. Bestehende Ladeinfrastruktur müsste mit einem solchen Sensor nachgerüstet werden. Außerdem ist ein Temperatursensor eine weitere, Kosten treibende Komponente innerhalb der Ladestation. Schließlich wäre beim Ausfall eines Temperatursensors keine Überwachung der Temperatur mehr möglich, was zur Folge haben könnte, dass die gesamte Ladestation aufgrund von Überschreitung von Temperaturgrenzwerten beschädigt werden könnte.

Die deutsche Offenlegungsschrift DE 10 2011 008 675 beschreibt ein Verfahren zum Aufladen einer Batterie eines Elektrofahrzeugs, wobei eine bedarfsgerechte Steuerung des Ladevorgangs erfolgt. Es werden Ladeprofile in Abhängigkeit von Stromtarifen oder der Auslastung der Ladestation erstellt.

Aus der deutschen Offenlegungsschrift DE 10 2011 107 900 A1 ist ein Verfahren zur Ermittlung eines maximal zur Verfügung stehenden Ladestroms für das Laden von Elektrofahrzeugen bekannt. Hierbei soll der Kommunikationsaufwand minimiert werden.

Schließlich beschreibt die US 2012/0326655 A1 ein Ladegerät für Fahrzeugbatterien. Es wird gelehrt, wie möglichst präzise eine voraussichtliche Ladezeit abgeschätzt werden kann. Dies wird dadurch erreicht, dass ein Steuergerät eine erste Ladezeit in Abhängigkeit einer ersten Ladeleistung sowie eine zweite Ladezeit in Abhängigkeit einer zweiten Ladeleistung abschätzt und darauf eine Gesamtladedauer bestimmt, über die der anschließende Zeitpunkt des Ladestarts festgelegt wird.
Aus diesem Grunde lag dem Gegenstand die Aufgabe zu Grunde, ein Verfahren zum Betreiben einer Ladestation zur Verfügung zu stellen, welches unter Beibehaltung einer hohen Ladeleistung die Lebensdauer einer Ladestation erhöht.

Diese Aufgabe wird durch ein Verfahren nach Anspruch 1 sowie eine entsprechende Vorrichtung gelöst.

Der dem Gegenstand zu Grunde liegende Gedanke besteht darin, dass durch Vorgabe eines Betriebsverhalten abhängig sowohl von der abgegebenen Leistung als auch der Zeit und durch Vorgabe von Leistungspausen für einen maximalen Leistungswert eine erhöhte Systemsicherheit und eine vergrößerte Lebensdauer der Ladestation erreicht wird.

Hierzu wird die Ladestation derart betrieben, dass sie in ihrer maximalen Leistungsabgabe zeitlich begrenzt ist. Regelmäßig haben Ladestationen Ladeleistungen von circa 22 Kilowatt. Andere maximale Ladeleistungen sind jedoch durchaus möglich und umfasst. Während eines Ladens wird nun die Ladeleistung insofern überwacht, als dass von dem in der Ladestation verbauten Messgerät eine Information an ein Steuergerät gegeben wird, welche Ladeenergie innerhalb welcher Zeit einem Fahrzeug zur Verfügung gestellt wurde. Hieraus kann in dem Steuergerät die aktuelle mittlere Ladeleistung festgestellt werden und es kann festgestellt werden, ob die maximale Ladeleistung anliegt oder nicht. Ferner kann festgestellt werden, ob die Ladeleistung oberhalb eines Grenzwertes liegt oder nicht. Das Messgerät kann hierbei ein sich bereits in der Ladestation befindlicher geeichter Zähler zur eichrechtskonformen Ermittlung der abgegebenen Energie sein.

Um zu Beginn eines Ladevorgangs sicherstellen zu können, dass die maximale Ladeleistung nicht überschritten wird, wird vorgeschlagen, dass zunächst ein maximaler Bemessungwert für einen Ladestrom oder die Ladeleistung bestimmt wird. Dies kann entweder ein fest vorgegebener Bemessungwert oder ein dynamisch bestimmter Bemessungswert sein.

Wenn nachfolgend von Bemessungswert für den Ladestrom die Rede ist, so ist auch alternativ ein Bemessungswert für die Ladeleistung mit gemeint.

Auch ist es möglich, dass der Bemessungswert für den Ladestrom oder die Ladeleistung von einem externen Server für jeden Ladevorgang einzeln zur Verfügung gestellt wird. Darüber hinaus kann auch die Ladestation beispielsweise abhängig von ihrem Zustand jeweils einen maximalen Bemessungwert für den Ladestrom oder die Ladeleistung bestimmen. Der maximale Bemessungswert kann sich auch aus einer Installationsvorgabe, den gewählten Absicherungselementen wie z.B. einem Leitungsschutzschalter und der verfügbaren Netzkapazität an diesem Ort der Ladestation ergeben.

Der bestimmte maximale Bemessungwert für den Ladestrom oder die Ladeleistung wird anschließend von der Ladestation an ein mit der Ladestation elektrisch gekoppeltes Elektrofahrzeug übermittelt. Hierzu eignen sich unterschiedlichste Verfahren, beispielsweise die Übermittlung mittels eines pulsweiten modellierten (PWM) Signals oder mittels Power Line Communication gemäß DIN 15 118 auf dem Energieleiter oder einem Pilotleiter, welcher das Elektrofahrzeug mit der Ladestation elektrisch koppelt. Auch bei induktiver Koppelung ist eine drahtlose Übertragung eines solchen Bemessungswertes möglich.

Neben der Bestimmung eines maximalen Bemessungswertes für den Ladestrom oder die Ladeleistung wird ein erstes Zeitintervall festgelegt. Dieses erste Zeitintervall kann zwischen beispielsweise 15 Minuten und einer Stunde liegen. Auch hier ist es möglich, dass das erste Zeitintervall abhängig von dem Bemessungswert und/oder von weiteren Parametern innerhalb der Ladestation bestimmt wird. Auch ist es möglich, dass zusammen mit dem Bemessungswert das erste Zeitintervall von einem externen Server vor einer jeden Ladung der Ladestation mitgeteilt wird. Darüber hinaus kann auch die Ladestation selbst das Zeitintervall für einen bestimmten Bemessungswert abhängig von Parametern, wie sie beispielsweise nachfolgend noch genannt werden, bestimmten.

Der maximale Bemessungswert für den Ladestrom wird, wie bereits erläutert, zwischen Ladestation und Elektrofahrzeug ausgehandelt. Während dieses Aushandelns kann das Elektrofahrzeug auch einen niedrigeren als den vorgeschlagenen maximalen Bemessungswert an die Ladestation übermitteln. Insofern können Ladestation und Fahrzeug einen Bemessungswert aushandeln, der geringer ist, als der nach Schritt a) bestimme maximale Bemessungswert. Insofern kann im Schritt c) das Zeitintervall auch von dem tatsächlich ausgehandelten maximalen Bemessungswert bestimmt werden.

Das Fahrzeug wird, nachdem das Zeitintervall bestimmt wurde, für dieses Zeitintervall mit dem zwischen Ladestation und Elektrofahrzeug ausgehandelten, vorzugsweise maximalen Bemessungswert des Ladestroms geladen. Das Elektrofahrzeug steuert den Ladestrom mittels seines Ladesteuergerätes entsprechend des ausgehandelten Bemessungswertes. In der Ladestation wird dieser Bemessungswert nur überwacht, jedoch nicht beschränkt. Bei einem Überschreiten des Bemessungswertes kann die Ladestation feststellen, dass das Elektrofahrzeug sich nicht an den ausgehandelten Bemessungswert hält und gegebenenfalls den Ladevorgang abbrechen oder den Ladestrom reduzieren.

Während oder im Anschluss an das erste Zeitintervall wird ein reduzierter Bemessungswert für den Ladestrom und ein zweites Zeitintervall bestimmt. Die Bestimmung des reduzierten Bemessungswertes für den Ladestrom und des zweiten Zeitintervalls können entsprechend der Bestimmung des maximalen Bemessungswertes und des ersten Zeitintervalls erfolgen. Dies bedeutet, dass dies entweder fest vorgegebenen sein kann oder auch durch einen von der Ladestation externen Server zur Verfügung gestellt werden kann. Auch kann die Ladestation abhängig von nachfolgend noch erläuterten Parametern diese beiden Werte bestimmten. Darüber hinaus ist es möglich, dass in der Ladestation, wie auch für den maximalen Bemessungswert und das zweite Zeitintervall eine Tabelle gespeichert ist, in der für jeden Stromwert oder für eine Mehrzahl von Stromintervallen jeweils erste bzw. zweite Zeitintervalle hinterlegt sind. Eine solche Tabelle kann ebenfalls von einem externen Server zur Verfügung gestellt werden.

Das Bestimmen des reduzierten Bemessungswertes und des zweiten Zeitintervalls liegt der Erkenntnis zu Grunde, dass die Lebensdauer der Ladestation deutlich verlängert werden kann, wenn diese nicht ständig mit maximaler Leistung betrieben wird. Auf der anderen Seite liegt dem reduzierten Bemessungswert die Erkenntnis zu Grunde, dass Elektrofahrzeuge nur zu Beginn einer Ladung ohne Weiteres mit einem sehr hohen Ladestrom geladen werden können, ohne das die Batterie Schaden nimmt.

Da aber ohnehin im Verlauf der Ladung der Ladestrom reduziert werden muss, kann dies gegenständlich auch durch die Ladestation gesteuert erfolgen. Anders als bei herkömmlichen Ladungen, bei denen allein das Elektrofahrzeug bzw. die Ladesteuerschaltung des Elektrofahrzeugs bestimmt, wann der Ladestrom reduziert wird, wird gegenständlich vorgeschlagen, dass dies durch die Ladestation erfolgt. Das Reduzieren des Ladestroms erfolgt auch nicht abhängig vom Ladezustand des Elektrofahrzeugs, wie dies im Stand der Technik bekannt ist, sondern ausschließlich gesteuert durch die Ladestation. Diese Steuerung durch die Ladestation führt zu einer erhöhten Systemsicherheit der Ladestation, da die Bauteile, insbesondere die Leistungskomponenten stets vor einer Überhitzung geschützt werden, ohne dass es einer Temperaturüberwachung in der Ladestation bedarf.

Insofern wird ein reduzierter Bemessungswert für den Ladestrom und ein zweites Zeitintervall bestimmt, wobei das zweite Zeitintervall eine Dauer bestimmt, während welcher der Ladestrom den reduzierten Bemessungswert nicht überschreiten darf. Die Übermittlung des reduzierten Bemessungswertes erfolgt wie bereits die Übermittlung des maximalen Bemessungswertes an das Elektrofahrzeug. Hierzu können die gleichen Methoden angewandt werden, wie beispielsweise das Anpassen des pulsweiten modellierten Signals auf einem Leiter zwischen dem Elektrofahrzeug und der Ladestation. Andere Übertragungsverfahren sind jedoch auch möglich.

In der Ladestation kann überwacht werden, ob sich das Elektrofahrzeug an den kommunizierten reduzierten Bemessungswert hält oder nicht. Hierzu kann von dem Messgerät in der Ladestation an das Steuergerät der Ladestation mitgeteilt werden, welche elektrische Energie innerhalb welches Zeitintervalls dem Fahrzeug zur Verfügung gestellt wurde. Durch Ableiten dieses Wertes über die Zeit kann in dem Ladesteuergerät auf eine mittleren Ladeleistung innerhalb eines Zeitintervalls und in Kenntnis der Ladespannung auf einen mittleren Ladestrom innerhalb eines Zeitintervalls geschlossen werden, welcher den reduzierten Bemessungswert nicht überschreiten darf. Für den Falls das der reduzierte Bemessungswert überschritten wird, kann die Ladestation den Ladevorgang beenden.

Das Elektrofahrzeug wird während des zweiten Zeitintervalls mit maximal dem reduzierten Bemessungswertes des Ladestroms geladen. Entweder kann innerhalb des zweiten Zeitintervalls der Ladevorgang abgebrochen werden, beispielsweise weil das Elektrofahrzeug vollständig geladen wurde oder das zweite Zeitintervall kann ablaufen, während die Ladung noch läuft. Im zweiten Fall können nach Ablauf des zweiten Zeitintervalls beispielsweise wieder ein erneuter maximaler Bemessungswert und ein erstes Zeitintervall entsprechend den Schritten a) bis d) bestimmt werden. Auch ist es denkbar, dass ein dritter Bemessungswert und ein drittes Zeitintervall in diesem Fall bestimmt werden.
Wird der Ladevorgang während des zweiten Zeitintervalls unterbrochen, kann, wie nachfolgend noch dargelegt werden wird, eine anschließende Ladung für einen bestimmten Zeitraum nach dem Beenden des ersten Ladevorganges mit einem reduzierten Bemessungswert erfolgen. Auch ist es möglich, dass lediglich das zweite Zeitintervall abgewartet wird, und sollte eine erneute Ladung stattfinden, diese innerhalb des zweiten Zeitintervalls mit dem reduzierten Bemessungswert beginnen. Gemäß einem Ausführungsbeispiel wird vorgeschlagen, dass das erste Zeitintervall, das zweite Zeitintervall und/oder der reduzierte Bemessungswert abhängig von zumindest einem weiteren Parameter aus einem Alter der Ladestation, einer Anzahl bisherigen Ladevorgänge an der Ladestation, einer Ladefrequenz bisheriger Ladevorgänge der Ladestation oder einer kumulierten Ladedauer bisheriger Ladevorgänge an der Ladestation bestimmt wird.
Wie zuvor bereits erläutert, können die Bemessungswerte als auch die Zeitintervalle abhängig von Parametern bestimmt werden. Diese Parameter können ladestationsinterne Werte, wie beispielsweise Alter, Anzahl der Ladevorgänge, Ladefrequenz und Ladedauer sein. An dieser Stelle sei ausdrücklich erwähnt, dass, wenn im Zusammenhang mit dieser Offenbarung erwähnt ist, dass der reduzierte Bemessungswert oder das zweite Zeitintervall abhängig von dem Parameter Umgebungstemperatur oder Datum bestimmt wird, diese Abhängigkeit der Werte von den Parametern Umgebungstemperatur oder Datum nicht mit beansprucht ist.

Die Umgebungstemperatur der Ladestation als auch Datumsinformationen, beispielsweise auch Informationen über eine aktuelle Jahreszeit, können von einem externen Server der Ladestation mitgeteilt werden. Hierzu können beispielsweise auch Wetterinformationen verwendet werden.

Das Alter der Ladestation kann beispielsweise in der Steuerschaltung der Ladestation oder in dem an die Ladestation angeschlossenen Server überwacht werden. Insbesondere kann die Ladestation einen Zeitempfänger aufweisen, derart, dass dieser die aktuelle Zeit kennt. Dieser Zeitempfänger kann beispielsweise eine DCF77 Zeitinformation empfangen. Ferner kann ein Zeitstempel gespeichert sein, der Informationen über das Datum der Inbetriebnahme der Ladestation enthält. Aus diesen beiden Informationen kann das Alter der Ladestation ermittelt werden.

Auch kann in der Steuerschaltung erfasst werden, wie viele Ladevorgänge bereits an der Ladestation erfolgten. Der so erfasste Wert kann als Anzahl der bisherigen Ladevorgänge verwendet werden.

Ebenfalls kann erfasst werden, innerhalb welcher Abstände Ladevorgänge stattfinden. Der Erfassung der Ladefrequenz liegt die Erkenntnis zu Grunde, dass der Alterungsprozess der Ladestation bzw. der darin verbauten Komponenten bei sehr hoher Ladefrequenz schneller ist als bei einer geringen Ladefrequenz. Bei einer hohen Ladefrequenz liegt eine nahezu dauerhafte Belastung der Komponenten der Ladestation vor, und es ist davon auszugehen, dass die mittlere Temperatur der Komponenten höher ist als bei einer geringen Ladefrequenz.

Schließlich kann auch die kumulierte Ladedauer bisheriger Ladevorgänge erfasst und gespeichert werden. Insbesondere die Dauer der Gesamtladevorgänge ist ein Maß dafür, welchem Alterungsprozess die Komponenten bereits unterworfen waren.

Alle diese Werte können in einem nichtflüchtigen Speicher innerhalb der Ladestation gespeichert werden. Auch ist es möglich, dass die in der Ladestation erfassten Werte von der Ladestation an einen externen Server übermittelt werden. Dort können diese Informationen verwendet werden, um beispielsweise die maximalen Bemessungswerte und die reduzierten Bemessungswerte für jede einzelne Ladestation zu berechnen um diese Werte anschließend, wie bereits erwähnt, vor jeder Ladung oder während der Ladung zur Verfügung zu stellen. Auch die Zeitintervalle können abhängig von diesen Parametern in dem externen Server berechnet werden.

Dabei ist zu beachten, dass wie bereits erläutert, die Zeitintervalle als auch die Bemessungswerte nicht nur in dem Server berechnet und der Ladestation zur Verfügung gestellt werden können, sondern auch unmittelbar in der Ladestation bestimmt werden können.

Gemäß einem Ausführungsbeispiel wird vorgeschlagen, dass das erste Zeitintervall und/oder das zweite Zeitintervall abhängig von dem jeweiligen Bemessungswert für den Ladestrom und einem jeweiligen Tupel von Parameter bestimmt wird. Insbesondere erfolgt die Bestimmung auf Basis von empirisch ermittelten Daten. Für jedes Tupel von Parameterwerten zusammen mit einem entsprechenden Bemessungswert kann ein erstes Zeitintervall oder ein zweites Zeitintervall abgespeichert werden. Auch ist es möglich, dass für jeden Parameterwert Intervalle bestimmt werden, für ein Tupel von Parameterwerten bestimmt wird, in welches Tupel von Parameterintervallen die aktuellen Parameterwerte fallen und abhängig von diesen Parameterintervallen und insbesondere auch von Intervallen von Bemessungswerten erste und zweite Zeitintervalle bestimmt werden. Dies führt dazu, dass die Datenmenge erheblich reduziert wird. Es ist lediglich zu erfassen, in welchem Intervall ein jeweiliger Parameterwert und ein jeweiliger Bemessungswert liegt und eine Tupel von Parameterintervallen und einem Bemessungswertintervall kann dann dazu genutzt werden, um die ersten und/oder zweiten Zeitintervalle zu bestimmen.

Die Zeitintervalle können dabei abhängig von empirisch ermittelten Daten bestimmt werden. Es ist möglich, dass verschiedene Ladestationen in Teststellungen mit unterschiedlichen Ladefrequenzen und Ladedauern getestet werden, wobei dabei die tatsächlichen Temperaturen innerhalb der Ladestation erfasst werden. Abhängig von diesen testweise ermittelten empirischen Daten lassen sich die Zeitintervalle abhängig von der Topologie der jeweiligen Ladestation bestimmten. Insbesondere kann die Bauweise unterschiedlicher Ladestationen, insbesondere der Bauraum unterschiedlich sein. Dies führt naturgemäß zu unterschiedlichen Temperaturverhalten welches vorzugsweise empirisch ermittelbar ist. Diese Kenntnis kann dann dazu verwendet werden, die Zeitintervalle zu bestimmen. Die empirisch ermittelten Daten können für jeweils eine Referenzladestation eines bestimmten Typs durchgeführt werden und anschließend für alle Ladestationen dieses Typs verwendet werden.
Aus diesem Grunde wird vorgeschlagen, dass das erste Zeitintervall und/oder das zweite Zeitintervall abhängig von dem jeweiligen Bemessungswert für den Ladestrom und einem Formfaktor der Ladestation bestimmt werden. Das heißt, dass neben dem jeweiligen Tupel von Parameterwerten auch eine Information über den Formfaktor bzw. über den Typ der Ladestation verwendet werden kann, um die Zeitintervalle für jeweilige Bemessungswerte festzulegen. Diese Informationen können in einem nichtflüchtigen Speicher innerhalb der Ladestation gespeichert werden. Zu Beginn eines Ladevorgangs kann die Ladestation dann die entsprechenden Parameterwerte und Bemessungswerte verwenden, um einen entsprechenden Bemessungswert zu bestimmen.
Wie bereits erläutert, kann zumindest einer der Parameterwerte von einer entfernten Zentrale (Server) empfangen werden. Diese Übertragung kann über ein Weitverkehrsnetz erfolgen, beispielsweise das Internet. Die Übertragung kann verschlüsselt sein. Auch ist es möglich, dass über eine Mobilfunkverbindung eine Verbindung mit dem Internet aufgebaut wird, um so Kontakt zwischen der Ladestation und der Zentrale aufbauen zu können.

Gemäß einem Ausführungsbeispiel wird vorgeschlagen, dass zumindest ein Parameterwert von einem in der Ladestation angeordneten Messgerät empfangen wird, insbesondere dass eine dem Elektrofahrzeug innerhalb eines bestimmtes Intervalls zur Verfügung gestellte Ladeenergie von einem in der Ladestation angeordneten Energiemessgerät empfangen wird. Ein solches Energiemessgerät kann beispielsweise ein Stromzähler, insbesondere ein Smartmeter sein. Innerhalb eines solchen Stromzählers ist es möglich, die zur Verfügung gestellte Energie in einem bestimmten Intervall zu erfassen und hieraus zusammen mit der Ladespannung den in diesem Intervall im Mittel fließenden Strom zu bestimmen.

Für jeden Parameterwert kann bestimmt werden, innerhalb welches Intervalls er liegt. Wenn für verschiedene Kombinationen von Intervallen von Parameterwerten entsprechende Intervalltupel vorliegen, kann für jedes Tupel von Parameterwerten ein Intervalltupel bestimmt werden. Für jedes dieser Intervalltupel können das erste Zeitintervall, das zweite Zeitintervall und/oder der jeweilige Bemessungswert bestimmt sein. Dieser lässt sich beispielsweise in einer Look-up Tabelle speichern. Unter Verwendung der Intervalltupel kann mit Hilfe der Look-up Tabelle der entsprechende Bemessungswerte bzw. das entsprechende Zeitintervall ermittelt werden. Das erste Zeitintervall, das zweite Zeitintervall und die jeweiligen Bemessungswerte können empirisch ermittelt werden. Dies kann in regelmäßigen Abständen in einer Teststellung erfolgen. Insbesondere kann es dazu kommen, dass sich die Zeitintervalle und Bemessungswerte für bestimmte Formfaktoren aufgrund geänderter Testbedingungen verändern. Insofern kann es notwendig sein, neue Informationen über Zeitintervalle und Bemessungswerte von der Zentrale an die Ladestation zu übermitteln. Aus diesem Grunde wird vorgeschlagen, dass für zumindest zwei Tupel von Parameterwerten oder Intervalltupel das erste Zeitintervall, das zweite Zeitintervall und/oder der jeweilige Bemessungswert von einer von der Ladestation räumlich entfernten Ladestationszentrale über ein Weitverkehrsnetz empfangen werden.

Wie bereits erläutert, wird vor oder mit Ablauf des ersten Zeitintervalls das zweite Zeitintervall bestimmt und der Ladevorgang mit dem reduzierten Bemessungswert fortgesetzt. Der Ladevorgang wird mit dem reduzierten Bemessungswert zumindest während der Dauer des zweiten Zeitintervalls fortgesetzt. Wird der Ladevorgang innerhalb des ersten Zeitintervalls oder des zweiten Zeitintervalls unterbrochen und beendet, können ein drittes Zeitintervall und ein reduzierter Bemessungswert bestimmt werden. Das dritte Zeitintervall kann dazu verwendet werden, dass ein innerhalb dieses Intervalls neu aufgenommener Ladevorgang nur noch mit dem reduzierten Bemessungswert durchgeführt werden kann. Wird der Ladevorgang innerhalb des zweiten Zeitintervalls unterbrochen, kann auch das dritte Zeitintervall bestimmt werden. Ein neuer Ladevorgang kann dann mit dem reduzierten Bemessungswert begonnen werden solange entweder das dritte Zeitintervall oder das zweite Zeitintervall nicht abgelaufen ist. Das bedeutet, dass wenn während des zweiten Zeitintervalls der Ladevorgang unterbrochen wird, zwar das dritte Zeitintervall bestimmt wird, dieses auch über das zweite Zeitintervall hinausgehen kann. Endet das zweite Zeitintervall jedoch vor dem Ende des dritten Zeitintervalls, ist ein neuer Ladevorgang nach Ablauf des zweiten Zeitintervalls bereits mit dem maximalen Bemessungswert möglich.

Auch ist es möglich, dass das dritte Zeitintervall bestimmt und dass ein neuer Ladevorgang in diesem dritten Zeitintervall gar nicht möglich ist, der Ladestrom z.B. gleich null ist. Zwar ist es in diesem Fall möglich, das Elektrofahrzeug an die Ladestation anzuschließen und den Ladevorgang anzustoßen, jedoch ist bis zum Ablauf entweder des dritten Zeitintervalls oder des zweiten Zeitintervalls, je nachdem welches früher beendet ist, der Ladestrom gleich null. Dies führt zu einem erheblich schnelleren Abkühlen der Ladestation. Auch ist es möglich, dass das zweite Zeitintervall und das dritte Zeitintervall gleichzeitig bestimmt werden. Auch ist es möglich, dass die beiden Zeitintervalle gleich groß bestimmt werden.

Die Schritte a) bis f) werden vorzugsweise ladestationsseitig, insbesondere in der Ladestation ausgeführt. Es ist jedoch auch möglich, dass die Schritte a) und e) in einer von der Ladestation entfernten Zentrale ausgeführt werden.

Gemäß einem Ausführungsbeispiel wird vorgeschlagen, dass der reduzierte Bemessungswert für den Ladestrom und das zweite Zeitintervall während des ersten Zeitintervalls oder, vorzugsweise unmittelbar, nach Ablauf des ersten Zeitintervalls bestimmt werden. Insbesondere kurz vor Ablauf des ersten Zeitintervalls ist absehbar, dass der Ladevorgang über das erste Zeitintervall hinaus durchgeführt wird. In diesem Fall kann beispielsweise eine Minute vor Ablauf des ersten Zeitintervalls das zweite Zeitintervall bestimmt werden, so dass im unmittelbaren Anschluss an das erste Zeitintervall der reduzierte Bemessungswert für den Ladestrom dem Ladefahrzeug mitgeteilt werden kann und der Ladevorgang ununterbrochen weitergeführt werden kann. Auch ist es möglich, dass unmittelbar nach Ablauf des ersten Zeitintervalls das zweite Zeitintervall bestimmt wird. Diese Bestimmung kann innerhalb weniger Millisekunden erfolgen, so dass auch hier ein nahezu unterbrechungsfreies Laden möglich ist.

Insbesondere kann es möglich sein, dass sich während eines Ladevorgangs Parameterwerte ändern, insbesondere die Umgebungstemperatur der Ladestation. Insofern kann es sinnvoll sein, dass das zweite Zeitintervall erst dann bestimmt wird, wenn es beginnt, also nach Ablauf des ersten Zeitintervalls. In diesem Fall können veränderte Parameterwerte vorliegen, so dass das zweite Zeitintervall abhängig von nach Ablauf des ersten Zeitintervalls vorhandenen Parameterwerten bestimmt wird.

Die zuvor genannten Verfahren können auch als Computerprogramm oder als auf einem Speichermedium gespeichertes Computerprogramm realisiert werden. Hierbei kann ladestationsseitig und/oder fahrzeugsseitig und/oder serverseitig ein Mikroprozessor zur Durchführung der jeweiligen Verfahrensschritte durch ein Computerprogramm geeignet programmiert sein.

Die Merkmale der Verfahren und Vorrichtungen sind frei miteinander kombinierbar. Insbesondere können Merkmale und Teilmerkmale der Beschreibung und/oder der abhängigen sowie unabhängigen Ansprüche, auch unter vollständiger oder teilweiser Umgehung von Merkmalen oder Teilmerkmalen der unabhängigen Ansprüche, in Alleinstellung oder frei miteinander kombiniert eigenständig erfinderisch sein. Nachfolgend wird der Gegenstand anhand einer Ausführungsbeispiele zeigenden Zeichnung näher erläutert. In der Zeichnung zeigen:

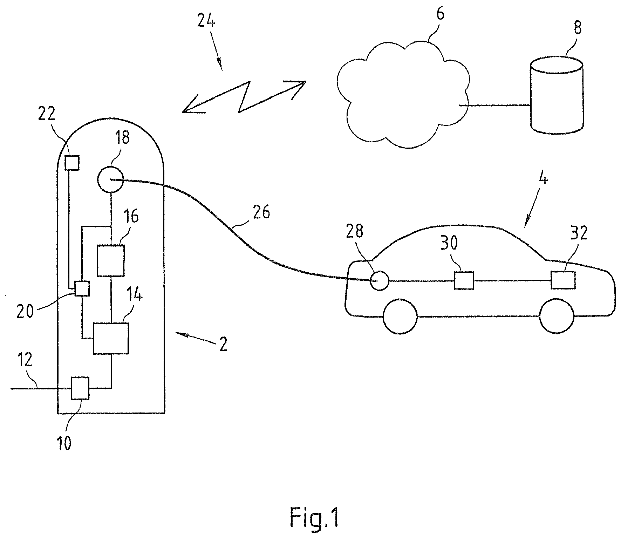

- Fig. 1: einen schematischen Aufbau eines Systems mit einer Ladestation und einem Elektrofahrzeug;
- Fig. 2: einen schematischen Ablauf eines gegenständlichen Verfahrens;
- Fig. 3: eine schematische Darstellung eines gegenständlichen Ladeverfahrens;
- Fig. 4: eine schematische Darstellung betreffend die Auswahl von Zeitintervallen.
Die Verwendung von Temperatur- und Datumsinformationen zur Bestimmung der Zeitintervalle und Bemessungswerte sind nicht Teil der Erfindung. Figur 1 zeigt eine Ladestation 2 sowie ein Elektrofahrzeug 4. Darüber hinaus zeigt Figur 1 ein Weitverkehrsnetz 6 sowie einen Zentralrechner 8.
Die Ladestation 2 weist einen Anschluss 10 zum Anschluss an ein Energieversorgungsnetz 12 auf. An den Anschluss 10 ist ein elektronischer Stromzähler 14 angeschlossen, mit dem eine Energiemessung möglich ist. Über eine daran angeschlossene Schutzschaltung 16, insbesondere gebildet aus Schütz und Sicherungen, ist der Stromzähler 14 mit einem Ausgang 18 verbunden.
In der Ladestation 2 ist darüber hinaus eine Steuerschaltung 20 angeordnet, die insbesondere den Ablauf des gegenständlichen Verfahrens steuert. Die Steuerschaltung 20 ist mit dem Stromzähler 14 verbunden. Darüber hinaus ist die Steuerschaltung 20 derart mit dem Energiestrang innerhalb der Ladestation 2 verbunden, dass diese Signale in die Leitungen ein- und auskoppeln kann, insbesondere Kommunikationssignale zur Kommunikation mit dem Elektrofahrzeug 4. Schließlich ist die Steuerschaltung 20 mit einer Kommunikationsschaltung 22 verbunden, beispielsweise einem Mobilfunkmodul oder einem sonstigen Kommunikationsmodul.

Die Kommunikationsschaltung 22 kommuniziert insbesondere über eine Luftschnittstelle 24, jedoch kann dies auch drahtgebunden erfolgen, über das Weitverkehrsnetz 6, beispielsweise dem Internet, einem Intranet, einem firmeninternen Netz oder dergleichen mit dem Zentralrechner 8, der ebenfalls an das Weitverkehrsnetz 6 angeschlossen ist.

Die Ladestation 2 ist in dem gezeigten Ausführungsbeispiel über ein Ladekabel 26 mit dem Elektrofahrzeug 4 verbunden. Das Ladekabel 26 ist insbesondere ein genormtes Ladekabel mit mindestens drei Leistungsleitungen, einer Masseleitung, einer Erdungsleitung, zwei Pilotleitern und einer "plug-present" Leitung.

Anstelle des Ladekabels 26 ist auch eine beispielsweise induktive Kopplung zwischen Ladestation 2 und Elektrofahrzeug 4 möglich. Das Ladekabel 26 ist mit dem Anschluss 28 des Elektrofahrzeugs 4 verbunden. Über den Anschluss 28 ist eine Ladesteuerschaltung 30 mit der Ladestation 2 verbunden. Über die Ladesteuerschaltung 30 ist eine Batterie 32 innerhalb des Fahrzeugs 4 aufladbar. Die Ladesteuerschaltung 30 übernimmt das Lademanagement der Batterie 32, insbesondere steuert diese den Ladestrom als auch den Entladestrom.

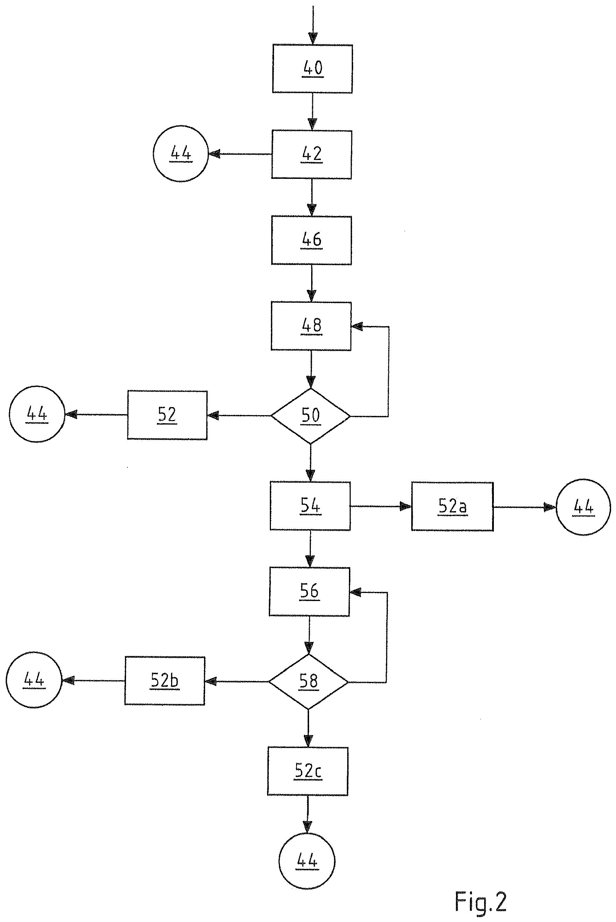

Mit Hilfe des gezeigten Systems ist die Durchführung eines gegenständlichen Verfahrens wie in Figur 2 gezeigt möglich.

Zu Beginn des Verfahrens wird ein maximaler Bemessungswert für den Ladestrom bestimmt (40). Dies kann innerhalb der Steuerschaltung 20 erfolgen. Insbesondere ist es möglich, dass dieser Wert ein fest vorgegebener Wert, beispielsweise abhängig von der maximalen Ladeleistung der Ladestation 2 ist. Eine solche maximale Ladeleistung ist beispielsweise 22 Kilowatt. Beispielsweise kann der Ladestrom bei einer Ladespannung von 360 Volt ca. 61 Ampere betragen. Nachdem der Bemessungswert bestimmt wurde (40), wird in der Steuerschaltung 22 ein entsprechendes Signal in das Ladekabel 26 eingekoppelt und der bestimmte Bemessungswert von der Ladestation 2 an das Elektrofahrzeug 4 übermittelt (42). Im Anschluss daran kann das Elektrofahrzeug 4 bzw. die Ladesteuerschaltung 30 den bestimmten Bemessungswert akzeptieren oder nicht. In dem Fall, in dem die Ladesteuerschaltung 30 den übermittelten Bemessungswert nicht akzeptiert, beendet die Ladestation 2 den Ladevorgang (44).

Für den Fall, dass die Ladesteuerschaltung 30 den übermittelten Bemessungswert akzeptiert, wird abhängig von dem Bemessungswert ein erstes Zeitintervall bestimmt (46). Die Bestimmung des ersten Zeitintervalls (46) kann auch vor der Übermittlung des Bemessungswertes an das Elektrofahrzeug erfolgen. Jedoch ist es auch möglich, dass bei der Übermittlung des maximalen Bemessungswertes von der Ladestation 2 an das Elektrofahrzeug 4 ein geänderter maximaler Bemessungswert zwischen dem Elektrofahrzeug 4 und der Ladestation 2 ausgehandelt wird. Abhängig von dem tatsächlich ausgehandelten Bemessungswert wird in Schritt 46 dann das erste Zeitintervall bestimmt.

Anschließend wird das Elektrofahrzeug mit dem so bestimmten Ladestrom innerhalb des ersten Zeitintervalls geladen (48). Es wird laufend überwacht (50) ob entweder das erste Zeitintervall abgelaufen ist oder der Ladevorgang unterbrochen wurde. Solange dies nicht der Fall ist, wird das Laden (48) fortgesetzt.

Für den Fall, dass während des ersten Zeitintervalls der Ladevorgang abgebrochen wird, beispielsweise durch Entfernen des Ladekabels, wird im Schritt 52 ein drittes Zeitintervall bestimmt. Dies kann abhängig von der bisherigen Ladedauer sein. Auch ist es möglich, dass dieses dritte Zeitintervall abhängig von dem Bemessungswert des Ladestroms ist. Für die Dauer dieses dritten Zeitintervalls kann eine anschließende Ladung beispielsweise nicht durchgeführt werden. Auch ist es möglich, dass für die Dauer dieses dritten Zeitintervalls eine anschließende Ladung nur mit einem geringen Ladestrom erfolgen kann. Nachdem das dritte Zeitintervall (52) bestimmt wurde, wird der Ladevorgang abgebrochen (44).

Für den Fall, dass im Schritt 50 erfasst wird, dass das erste Zeitintervall abgelaufen ist, wird ein zweites Zeitintervall (54) bestimmt. Außerdem wird im Schritt 54 ein zweiter, reduzierter Bemessungswert für den Ladestrom bestimmt. Der reduzierte Bemessungswert für den Ladestrom wird an das Fahrzeug 4 kommuniziert. Für den Fall, dass das Fahrzeug 4 bzw. dessen Ladesteuerschaltung 30 den so bestimmten reduzierten Bemessungswert nicht akzeptiert, wird entsprechend Schritt 52 in einem Schritt 52a ein drittes Zeitintervall bestimmt und anschließend der Ladevorgang abgebrochen (44).

Akzeptiert das Elektrofahrzeug 4 bzw. dessen Ladesteuerschaltung 30 den reduzierten Bemessungswert und ist ein zweites Zeitintervall in der Ladestation 2 bzw. der Steuerschaltung 30 bestimmt worden, wird im Schritt 56 der Ladevorgang mit dem reduzierten Bemessungswert fortgesetzt. Das Elektrofahrzeug 4 wird während der Dauer des zweiten Zeitintervalls mit dem reduzierten Ladestrom geladen.

Im Schritt 58 wird überwacht, ob entweder der Ladevorgang abgebrochen wurde oder das zweite Zeitintervall abgelaufen ist. Wurde der Ladevorgang während der Dauer des zweiten Zeitintervalls abgebrochen, so wird in einem Schritt 52b entsprechend den Schritten 52 und 52a ein drittes Zeitintervall bestimmt und anschließend der Ladevorgang abgebrochen (44). Auch für den Fall, dass das zweite Zeitintervall abgelaufen ist, wird in einem Schritt 52c das dritte Zeitintervall bestimmt und anschließend der Ladevorgang abgebrochen.

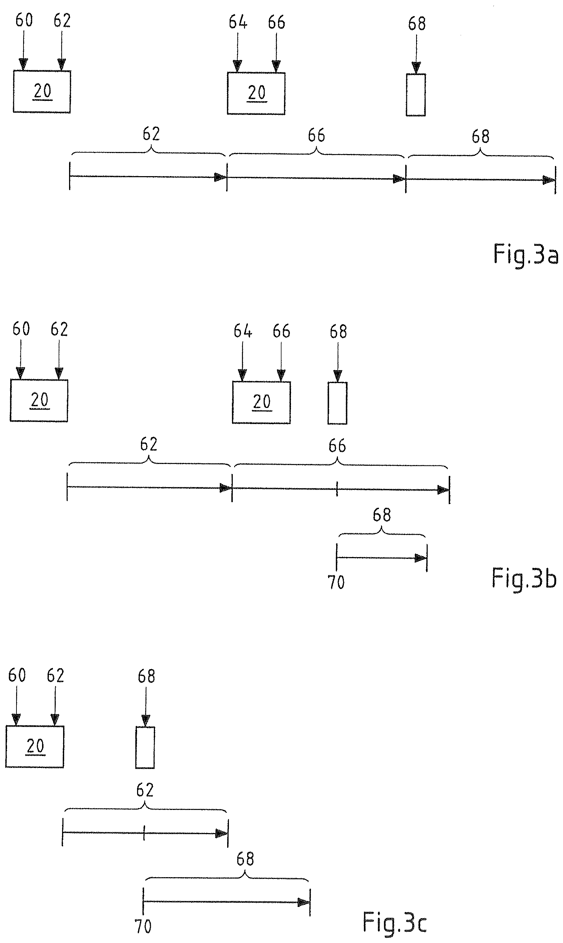

Das Verhältnis der jeweiligen Zeitintervalle zueinander ist schematisch in Figur 3 dargestellt.

Figur 3a zeigt beispielhaft, dass die Steuerschaltung 20 zum Beispiel von dem Zentralrechner 8 einen ersten Bemessungswert 60 und einen Wert eines ersten Zeitintervalls 62 empfängt. Während der Dauer des ersten Zeitintervalls 62 überwacht die Steuerschaltung 20 den Ladevorgang zwischen Ladestation 2 und Elektrofahrzeug 4.

Nach Ablauf des ersten Zeitintervalls 62 empfängt die Steuerschaltung 20 von dem Zentralrechner 8 beispielsweise einen zweiten, reduzierten Bemessungswert 64 und einen Wert für ein zweites Zeitintervall 66. Während der Dauer des zweiten Zeitintervalls 66 wird das Elektrofahrzeug 4 weiter mit einem reduzierten Ladestrom geladen und die Steuerschaltung 20 überwacht den Ladevorgang.

Nach Ablauf des zweiten Zeitintervalls 66 kann erneut ein Bemessungswert ausgehandelt werden, beispielsweise ein maximaler Bemessungswert, was hier nicht dargestellt ist. Wenn nach Ablauf des zweiten Zeitintervalls 66 der Ladevorgang beendet ist, wird von der Steuerschaltung 20 ein Wert für ein drittes Zeitintervall 68 empfangen. Während der Dauer des dritten Zeitintervalls 68 kann beispielsweise eine erneute Ladung eines anderen Elektrofahrzeugs an derselben Ladestation 2 zunächst nur mit einem reduzierten Ladestrom erfolgen. Auch ist es möglich, dass während der Dauer des dritten Zeitintervalls 68 beispielsweise gar keine Ladung ermöglicht ist.

Figur 3b zeigt beispielhaft einen Ladevorgang, bei dem das Laden während des zweiten Zeitintervalls 66 abgebrochen wird. Auch in diesem Fall empfängt die Steuerschaltung 20 einen Wert eines dritten Zeitintervalls 68. Im Anschluss an das Beenden der Ladung, wie es beispielhaft zum Zeitpunkt 70 stattfindet, laufen die beiden Zeitintervalle 66 und 68 weiter. Wenn eines der beiden Zeitintervalle 66 und 68 beendet ist, kann eine anschließende Ladung mit dem maximalen Bemessungswert für den Ladestrom erfolgen. Zumindest während der Dauer eines der Zeitintervalle 66 und 68 kann jedoch eine anschließende Ladung in Anschluss an das Ende 70 eines Ladevorgangs nur mit einem reduzierten Bemessungswert durchgeführt werden.

Figur 3c zeigt ein ähnliches Beispiel, bei dem der Ladevorgang während der Dauer des ersten Zeitintervalls 62 beendet wird. Auch hier wird zum Zeitpunkt der Beendigung des Ladevorgangs ein drittes Zeitintervall 68 empfangen. Eine anschließende Ladung kann erneut erst mit dem maximalen Bemessungswert für den Ladestrom erfolgen, wenn eines der beiden Zeitintervalle 62 oder 68 abgelaufen ist. In der Figur 3c ist zu erkennen, dass vor Ablauf des dritten Zeitintervalls 68 das zweite Zeitintervall 62 beendet ist, so dass bereits dann ein Ladevorgang möglich ist.

Ergänzend sei erwähnt, dass ein erneuter Ladevorgang früher oder mit einem erhöhten Strom möglich gemacht wird, wenn hierfür das Zeitintervall maßgeblich ist, welches früher abläuft. Dies erhöht die Ladefähigkeit einer Ladestation 2.

Für den Fall, dass die Ladestation 2 bzw. deren Komponenten möglichst geschont werden sollen und die Lebensdauer der Ladestation 2 verlängert werden soll, ist es jedoch auch möglich, nach Beendigung des Ladevorgangs abzuwarten, welches Intervall später abläuft und erst dann einen darauffolgenden Ladevorgang mit dem maximalen Bemessungswert zu ermöglichen.

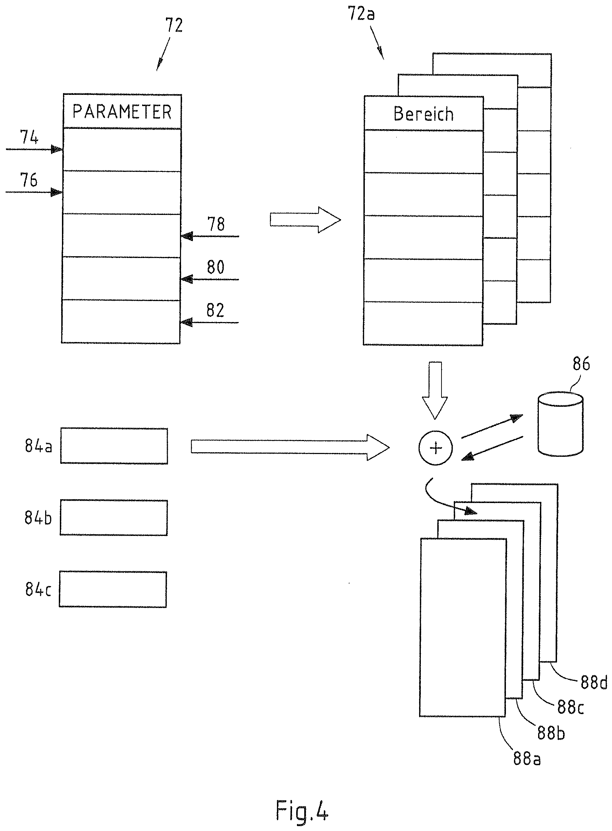

Figur 4 zeigt schematisch, wie ein bestimmtes Zeitintervall abhängig von Parametern der Ladestation 2 bestimmt werden kann.

Zunächst ist zu erkennen, dass ein Tupel 72 an Parametern erfasst wird. Hierbei können beispielsweise externe Werte wie Umgebungstemperatur 74 und Datum 76 von der Ladestation 2 bzw. dessen Kommunikationsleitung 22 empfangen werden. Diese Werte 74, 76 können von dem Zentralrechner 8 zur Verfügung gestellt werden.

Darüber hinaus kann in der Ladestation 2 durch die Steuerschaltung 20 beispielsweise auch das Alter 78 der Ladestation 2, die Anzahl und die kumulierte Ladedauer der bisherigen Ladevorgänge 80 und beispielsweise auch die Ladefrequenz bisheriger Ladevorgänge 82 erfasst und in das Tupel 72 eingeschrieben werden.

Die in dem Tupel 72 eingeschriebenen Parameterwerte 74 - 82 können anschließend mit verschiedenen Sätzen von Parameterintervallen 72a verglichen werden. Anschließend kann überprüft werden, in welches Tupel 72a der Parameterintervalle das Tupel 72 passt, das heißt, in welches Tupel 72a die Kombination der Parameterwerte 74 - 82 eingefügt werden kann. Die entsprechenden Werte 74 bis 82 liegen dann innerhalb der Werteintervalle des entsprechenden Tupels 72a.

Das ausgewählte Tupel 72a wird zusammen mit einem Bemessungswert 84a bis c eines Ladestroms ergänzt. Beispielsweise ist der Bemessungswert 84a der maximale Bemessungswert für den Ladestrom, der Bemessungswert 84b der reduzierte Bemessungswert für den Ladestrom und der Bemessungswert 84c ein weiterer Bemessungswert, der für eine anschließende Ladung verwendet wird, so lange das dritte Zeitintervall noch nicht abgelaufen ist.

Die Werte 72a und 84a werden gemeinsam verwendet, um in einer Datenbank 86, die entweder in der Ladestation 2 gespeichert ist und von dem Zentralrechner 8 empfangen wurde oder in dem Zentralrechner 8 gespeichert ist, ein hierzu geeignetes Zeitintervall zu ermitteln. Hierzu ist es auch möglich, dass diese Werte 72a und 84a an den Zentralrechner 8 durch die Kommunikationsstelle 22 übermittelt werden. In der Datenbank 86 lässt sich für jede Kombination an Tupel 72a und Bemessungswert 84a-c ein entsprechendes Zeitintervall 88a - 88d ermitteln. In dem gezeigten Beispiel ist das Zeitintervall 88c das jenige, welches zu dem Tupel 72a und dem Bemessungswert 84a passt. Das ausgewählte Zeitintervall kann in der Steuerschaltung 20 ermittelt werden, wenn dort die Datenbank 86 vorhanden ist. Wird das Zeitintervall in dem Zentralrechner 8 ermittelt, wird es über die Luftschnittstelle 24 zurück an die Ladestation 2 übertragen und dort entsprechend angewandt.

Die in Figur 4 gezeigte Auswahl der Zeitintervalle kann neben den gezeigten Parametern auch noch von weiteren Parametern abhängen.

Mit Hilfe des gegenständlichen Verfahrens ist es möglich, eine Ladestation besonders Komponenten schonend zu betreiben, ohne dass eine aufwändige Temperaturerfassung innerhalb der Ladestation zwingend notwendig ist. Die Lebensdauer einer Ladestation 2 kann somit in besonders einfacher Weise verlängert werden. Die Wartungszyklen für die Wartung der Ladestation 2 können verlängert werden.

## Patentansprüche

1. Verfahren zum Betreiben einer Ladestation für Elektrofahrzeuge bei dem
a) ein maximaler Bemessungswert für einen Ladestrom oder eine Ladeleistung bestimmt wird,
wobei der maximale Bemessungswert aus einer Installationsvorgabe, einem gewählten Absicherungselement oder aus der am Ort der Ladestation vorgegebenen Netzkapazität vorgegeben wird oder durch Aushandlung zwischen der Ladestation und dem Fahrzeug bestimmt wird,
b) der bestimmte maximale Bemessungswert von der Ladestation an ein mit der Ladestation elektrisch gekoppeltes Elektrofahrzeug übermittelt wird,
c) abhängig von zumindest dem maximalen Bemessungswert ein erstes Zeitintervall bestimmt wird,
d) das Elektrofahrzeug während des ersten Zeitintervalls mit maximal dem maximale Bemessungswert des Ladestroms geladen wird,
e) während oder nach Ablauf des ersten Zeitintervalls ein reduzierter Bemessungswert für den Ladestrom oder die Ladeleistung, der gegenüber dem vorherigen Ladestrom bzw. der vorherigen Ladeleistung reduziert ist, und ein zweites Zeitintervall bestimmt wird, wobei das zweite Zeitintervall eine Dauer bestimmt, während welcher der Ladestrom den reduzierten Bemessungswert nicht überschreiten darf,
f) der reduzierte Bemessungswert an das Elektrofahrzeug übermittelt wird, und
g) das Elektrofahrzeug während des zweiten Zeitintervalls mit maximal dem reduzierten Bemessungswert des Ladestroms oder der Ladeleistung geladen wird **dadurch gekennzeichnet, dass**
- das zweite Zeitintervall und/oder der reduzierte Bemessungswert abhängig von zumindest einem weiteren Parameter aus
- einem Alter der Ladestation,
- einer Anzahl bisheriger Ladungsvorgänge an der Ladestation,
- einer Anzahl bisheriger Ladungsvorgänge mit maximalem Ladestrom oder maximaler Ladeleistung an der Ladestation,
- einer Ladefrequenz bisheriger Ladevorgänge an der Ladestation, oder
- einer kumulierten Ladedauer bisheriger Ladevorgänge an der Ladestation bestimmt wird.

2. Verfahren nach Anspruch 1, **dadurch gekennzeichnet, dass** das erste Zeitintervall und/oder das zweite Zeitintervall abhängig von dem jeweiligen Bemessungswert für den Ladestrom oder die Ladeleistung und einem jeweiligen Tupel von Parameterwerten bestimmt wird, das unter anderem den weiteren Parameter enthält.

3. Verfahren nach einem der vorangehenden Ansprüche, **dadurch gekennzeichnet, dass** das erste Zeitintervall und/oder das zweite Zeitintervall abhängig von dem jeweiligen Bemessungswert für den Ladestrom oder die Ladeleistung und einem Formfaktor der Ladestation bestimmt wird.

4. Verfahren nach einem der vorangehenden Ansprüche, **dadurch gekennzeichnet, dass** zumindest ein Parameterwert von einer von der Ladestation räumlich entfernt angeordneten Zentrale über ein Weitverkehrsnetz empfangen wird.

5. Verfahren nach einem der vorangehenden Ansprüche, **dadurch gekennzeichnet, dass** zumindest ein Parameterwert von einem in der Ladestation angeordneten Messgerät empfangen wird, insbesondere dass eine dem Elektrofahrzeug innerhalb eines bestimmten Intervalls zur Verfügung gestellte Ladeenergie von einem in der Ladestation angeordneten Energiemessgerät empfangen wird.

6. Verfahren nach einem der vorangehenden Ansprüche, **dadurch gekennzeichnet, dass** das erste Zeitintervall, das zweite Zeitintervall und/oder der jeweilige Bemessungswert, für zumindest zwei Tupel von ermittelten Parameterwerten bestimmt sind und über ein Weitverkehrsnetz von einer der Ladestation räumlich entfernten Zentrale empfangen werden.

7. Verfahren nach einem der vorangehenden Ansprüche, **dadurch gekennzeichnet, dass** spätestens nach Abschluss eines Ladevorgangs der reduzierter Bemessungswert für den Ladestrom oder die Ladeleistung und ein drittes Zeitintervall bestimmt wird, wobei das dritte Zeitintervall eine Dauer bestimmt, während welcher der Ladestrom oder die Ladeleistung den reduzierten Bemessungswert nicht überschreiten darf oder der Ladestrom oder die Ladeleistung gleich Null ist.

8. Verfahren nach einem der vorangehenden Ansprüche, **dadurch gekennzeichnet, dass** das zweite Zeitintervall und das dritte Zeitintervall gleichzeitig bestimmt werden, und/oder dass das zweite Zeitintervall gleich dem dritten Zeitintervall bestimmt wird.

9. Verfahren nach einem der vorangehenden Ansprüche, **dadurch gekennzeichnet, dass** zumindest einer der Schritte a) - f) ladestationsseitig, insbesondere in der Ladestation ausgeführt werden.

10. Verfahren nach einem der vorangehenden Ansprüche, **dadurch gekennzeichnet, dass** der reduzierte Bemessungswert für den Ladestrom oder die Ladeleistung und das zweite Zeitintervall während des ersten Zeitintervalls oder, vorzugsweise unmittelbar, nach Ablauf des ersten Zeitintervalls bestimmt werden.

11. Verfahren nach einem der vorangehenden Ansprüche, **dadurch gekennzeichnet, dass** das zweite Zeitintervall abhängig von nach Ablauf des ersten Zeitintervalls vorhandenen Parameterwerten bestimmt wird.

## Claims

1. Method for operating a charging station for electric vehicles in which
a) a maximum rated value is determined for a charging current or a charging power,
wherein the maximum rated value is predetermined from an installation specification, a selected fuse protection element or from the network capacity which is predetermined at the location of the charging station or is established by means of negotiation between the charging station and the vehicle,
b) the determined maximum rated value is transmitted from the charging station to an electric vehicle which is electrically connected to the charging station,
c) depending on at least the maximum rated value, a first time period is determined,
d) during the first time period, the electric vehicle is charged with a maximum of the maximum rated value of the charging current,
e) during the first time period or after it has elapsed, a reduced rated value for the charging current or the charging power which is reduced with respect to the previous charging current or the previous charging power and a second time period are determined, wherein the second time period determines a period of time during which the charging current must not exceed the reduced rated value,
f) the reduced rated value is transmitted to the electric vehicle, and
g) the electric vehicle, during the second time period, is charged with a maximum of the reduced rated value of the charging current or the charging power,
**characterised in that**
- the second time period and/or the reduced rated value is determined in accordance with at least one additional parameter from
- an age of the charging station,
- a number of previous charging operations at the charging station,
- a number of previous charging operations with maximum charging current or maximum charging power at the charging station,
- a charging frequency of previous charging operations at the charging station, or
- a cumulative charging duration of previous charging operations at the charging station.

2. Method according to claim 1, **characterised in that** the first time period and/or the second time period is/are determined in accordance with the respective rated value for the charging current or the charging power and a respective tuple of parameter values which contains inter alia the additional parameter.

3. Method according to either of the preceding claims, **characterised in that** the first time period and/or the second time period is/are determined in accordance with the respective rated value for the charging current or the charging power and a form factor of the charging station.

4. Method according to any one of the preceding claims, **characterised in that** at least one parameter value is received via a wide area network from a central station which is arranged so as to be spatially remote from the charging station.

5. Method according to any one of the preceding claims, **characterised in that** at least one parameter value is received from a measurement device which is arranged in the charging station, in particular **in that** a charging energy which is provided for the electric vehicle within a specific time period is received from an energy measurement device which is arranged in the charging station.

6. Method according to any one of the preceding claims, **characterised in that** the first time period, the second time period and/or the respective rated value are determined for at least two tuples of established parameter values and are received via a wide area network from a central station which is spatially remote from the charging station.

7. Method according to any one of the preceding claims, **characterised in that**, at the latest after completing a charging operation, the reduced rated value for the charging current or the charging power and a third time period are determined, wherein the third time period determines a period of time during which the charging current or the charging power must not exceed the reduced rated value or the charging current or the charging power is equal to zero.

8. Method according to any one of the preceding claims, **characterised in that** the second time period and the third time period are determined at the same time and/or **in that** the second time period is determined to be equal to the third time period.

9. Method according to any one of the preceding claims, **characterised in that** at least one of the steps a) to f) is carried out at the charging station side, in particular in the charging station.

10. Method according to any one of the preceding claims, **characterised in that** the reduced rated value for the charging current or the charging power and the second time period are determined during the first time period or, preferably immediately after the first time period has elapsed.

11. Method according to any one of the preceding claims, **characterised in that** the second time period is determined in accordance with parameter values which are present after the first time period has elapsed.

## Revendications

1. Procédé destiné au fonctionnement d'une station de charge pour des véhicules électriques, dans lequel
a) une valeur de mesure maximale est déterminée pour un courant de charge ou pour une puissance de charge, sachant que la valeur de mesure maximale est prédéterminée à partir d'une consigne d'installation, d'un élément de sécurisation sélectionné ou à partir de la capacité prédéterminée du réseau sur les lieux de la station de charge, ou est définie par négociations entre la station de charge et le véhicule automobile,
b) la valeur de mesure maximale définie est transmise de la station de charge à un véhicule électrique, couplé électriquement à la station de charge,
c) un premier intervalle de temps est déterminé en fonction d'au moins la valeur de mesure maximale,
d) le véhicule électrique est chargé au maximum à la valeur de mesure maximale du courant de charge pendant le premier intervalle de temps,
e) pendant et après l'écoulement du premier intervalle de temps, une valeur de mesure réduite par rapport au courant de charge précédent ou par rapport à la puissance de charge précédente est déterminée pour le courant de charge ou pour la puissance de charge, et un deuxième intervalle de temps est déterminé, sachant que le deuxième intervalle de temps définit une durée pendant laquelle le courant de charge ne doit pas surpasser la valeur de mesure réduite,
f) la valeur de mesure réduite est déterminée sur le véhicule électrique et
g) le véhicule électrique est chargé au maximum à la valeur de mesure réduite du courant de charge ou de la puissance de charge pendant le deuxième intervalle de temps, **caractérisé en ce que**
- le deuxième intervalle de temps et / ou la valeur de mesure réduite sont déterminés en fonction d'au moins un autre paramètre, dont
- un âge de la station de charge,
- un nombre des processus de charge effectués précédemment à la station de charge, avec courant de charge maximal ou puissance de charge maximale,
- une fréquence des processus de charge à la station de charge ou
- une durée de charge cumulée des processus de charge effectués précédemment à la station de charge.

2. Procédé selon la revendication 1,
**caractérisé en ce que** le premier intervalle de temps et / ou le deuxième intervalle de temps sont déterminés en fonction de la valeur de mesure respective pour le courant de charge ou la puissance de charge et qu'un tuple respectif de valeurs de paramètres, est défini, lequel comprend entre autres un autre paramètre.

3. Procédé selon l'une des revendications précédentes,
**caractérisé en ce que** le premier intervalle de temps et / ou le deuxième intervalle de temps sont déterminés en fonction de la valeur de mesure respective pour le courant de charge ou la puissance de charge et qu'un facteur de forme de la station de charge est défini.

4. Procédé selon l'une des revendications précédentes,
**caractérisé en ce qu'**au moins une valeur de paramètre est reçue, par l'intermédiaire d'un réseau de trafic à grande distance, par une centrale localement éloignée de la station de charge.

5. Procédé selon l'une des revendications précédentes,
**caractérisé en ce qu'**au moins une valeur de paramètre est reçue par un appareil de mesure, disposé dans la station de charge, en particulier qu'une énergie de charge mise à disposition du véhicule électrique au cours d'un intervalle de temps défini est reçue par un appareil de mesure d'énergie disposé dans la station de charge.

6. Procédé selon l'une des revendications précédentes,
**caractérisé en ce que** le premier intervalle de temps, le deuxième intervalle de temps et / ou la valeur de mesure respective sont déterminés pour au moins deux tuples de valeurs de paramètres déterminées et sont reçus, par l'intermédiaire d'un réseau de trafic à grande distance, par une centrale localement éloignée de la station de charge.

7. Procédé selon l'une des revendications précédentes,
**caractérisé en ce que**, après la terminaison d'un processus de charge, la valeur de mesure réduite est déterminée pour le courant de charge ou pour la puissance de charge et qu'un troisième intervalle de temps est déterminé, sachant que le troisième intervalle de temps définit une durée pendant laquelle le courant de charge ou la puissance de charge ne doit pas surpasser la valeur de mesure réduite ou que le courant de charge ou la puissance de charge égalent zéro.

8. Procédé selon l'une des revendications précédentes,
**caractérisé en ce que** le deuxième intervalle de temps et le troisième intervalle de temps sont déterminés simultanément, et / ou que le deuxième intervalle de temps est déterminé égal au troisième intervalle de temps.

9. Procédé selon l'une des revendications précédentes,
**caractérisé en ce que** l'une des étapes a) - f) au moins est exécutée côté station de charge, en particulier dans la station de charge.

10. Procédé selon l'une des revendications précédentes,
**caractérisé en ce que** la valeur de mesure réduite pour le courant de charge ou pour la puissance de charge et le deuxième intervalle de temps sont déterminés pendant le premier intervalle de temps ou, de préférence, directement après écoulement du premier intervalle de temps.

11. Procédé selon l'une des revendications précédentes,
**caractérisé en ce que** le deuxième intervalle de temps est déterminé en fonction des valeurs de paramètres présentes après écoulement du premier intervalle de temps.
